# EUROPÄISCHE PATENTANMELDUNG

(11) **EP 0 623 275 A1**
(43) Veröffentlichungstag der Anmeldung: **09.11.1994**
(21) Anmeldenummer: 94101227.0
(22) Anmeldetag: 28.01.1994
(51) Int. Cl.: A01D 34/66, A01B 73/00

(54) **Tragrahmen für ein Rotormähwerk grosser Arbeitsbreite**

(30) Priorität: 30.04.1993 DE 4314250
(71) Anmelder: FORTSCHRITT ERNTEMASCHINEN GmbH, D-01844 Neustadt (DE)
(72) Erfinder: Reissig, Peter, Dipl.-Ing., D-01844 Neustadt (DE); Zumpe, Bernd, Dipl.-Ing., D-01877 Bischofswerda (DE)
(74) Vertreter: Müller, Lutz

(57) **Zusammenfassung**

Die Erfindung betrifft einen Tragrahmen für ein Rotormähwerk großer Arbeitsbreite zum Frontanbau an eine selbstfahrende Landmaschine, einen Geräteträger oder einen Schlepper bzw. für eine gezogene Mähmaschine.

Dazu ist in die Hubeinrichtung (3) genannter Geräte ein Rahmen (6) mit einem quer zur Fahrtrichtung weisenden Vorderträger (7) eingehangen. An dessen Unterseite sind an den beiden Enden und in der Mitte je ein Zapfen (8) als Drehpunkt für eine mittlere Hauptschwinge (9) und seitliche Schwingen (10) angebracht,wodurch diese in einer horizontalen Ebene verschwenkbar sind. Die Hauptschwinge (9) ist im Vergleich zur Fahrtrichtung schräg angestellt und überragt den Vorderträger (7) nach vorn und hinten gleichmäßig. Die benachbarten Schwingen (10) sind parallel zu den überragenden Teilstücken der Hauptschwinge (9) ausgerichtet und bilden mit diesen ein Parallelogramm. Zwischen deren freien Enden hängt an je einem Tragbalken (11) eine linke Mäheinheit (12) und eine rechte Mäheinheit (13).

Diese Anhängung ermöglicht beiden Mäheinheiten (12;13) eine Querverschiebung zur Fahrtrichtung unmittelbar hintereinander, so daß sie sich in der Arbeitsstellung nur in der Mitte geringfügig und in der Transportstellung fast vollständig überdecken.

## Beschreibung

Die Erfindung betrifft einen Tragrahmen für ein Rotormähwerk großer Arbeitsbreite nach dem Oberbegriff des Anspruches 1.

Es sind bereits einige gattungsgemäße Rotormähwerke bekannt, die Arbeitsbreiten bis zu 8 Metern aufweisen und aus zwei oder drei Mäheinheiten bestehen.

So hat beispielsweise die österreichische Firma STEYR mit einem Informationsblatt (ohne Druckvermerk) ein an ihren Geräteträger 8320 vorn anbringbares Industrietrommelmähwerk vom Typ "Victor 6" vorgestellt, das aus einer linken und einer rechten Mäheinheit besteht. Beide Mäheinheiten sind am gemeinsamen Tragrahmen auf einer Linie quer zur Fahrtrichtung einzeln angehangen.Zur Bodenkopierung besitzt jede Mäheinheit ein eigenes Entlastungssystem.

Der Antrieb erfolgt vom Geräteträger aus.

Zum Transport auf öffentlichen Straßen werden zur Einhaltung der maximal zulässigen Breite beide Mäheinheiten um etwa 90 Grad nach oben geschwenkt.

Nachteilig an dieser Lösung ist, daß auf Grund der einzelnen Entlastungssysteme der Materialaufwand relativ hoch ist. Außerdem ist ein synchroner Zwangsantrieb zwischen beiden Mäheinheiten im Überschnittbereich zu realisieren, so daß es dort zu keinen Schäden kommt. Am problematischsten ist aber die oben erwähnte Transportfahrt, da durch die hochgeschwenkten Mäheinheiten das Sichtfeld für den Fahrer erheblich eingeschränkt ist.Weiterhin ist noch von Nachteil, daß durch die hochgeschwenkten Mäheinheiten deren Schwerpunktlage sehr hoch ist, was sich negativ auf die Fahrstabilität auswirkt.

Eine ähnliche Ausführung mit drei Mäheinheiten am gleichen Geräteträger von der Firma STEYR, aber mit Rotormähwerken von der deutschen Firma MöRTL und der niederländischen Firma ZWEEGERS, wurden in der niederländischen Fachzeitschrift "Loonbedrijf" in der Nummer 8 vom 19.Juni 1992 vorgestellt.

Hier wird in die Hubeinrichtung des Geräteträgers ein Tragrahmen eingehangen, an dem die mittlere Mäheinheit und die beiden seitlichen Mäheinheiten separat angebracht sind. Das mittlere Mähwerk sitzt dabei in Fahrtrichtung gesehen etwas weiter vorn als die beiden seitlichen, die sich auf einer Linie quer zur Fahrtrichtung befinden.Durch diesen Versatz wird ein Überschnitt zwischen den einzelnen Mäheinheiten realisiert, der keinen synchronen Antrieb der einzelnen Mäheinheiten untereinander erfordert. Jede Mäheinheit hat ein eigenes Entlastungssystem und die beiden seitlichen Mähwerke werden zum Straßentransport um 90 Grad nach oben geschwenkt.

Auch hier sind der hohe Materialaufwand wegen der einzelnen Entlastungssysteme und die hohe Schwerpunktlage mit den vorstehenden Auswirkungen auf die Fahrstabilität als Nachteile zu nennen.

Ebenso problematisch ist das schlechte Sichtfeld für den Fahrer beim Straßentransport.

Eine weitere Ausführung eines gattungsgemäßen Tragrahmens für ein sehr breites Rotormähwerk bietet die deutsche Firma CLAAS mit der Typbezeichnung "CORTO 8100 F" im Prospekt mit dem Druckvermerk 9/92(Rho)65/247.456.0 an, wo drei Mäheinheiten mit einer Gesamtarbeitsbreite von 7,8 Meter vorn an einen selbstfahrenden Feldhäcksler angebracht sind. Die Hubeinrichtung nimmt auch hier einen Tragrahmen auf, an dem die mittige Mäheinheit und die beiden seitlichen Mäheinheiten gleichmäßig nach hinten versetzt angebracht sind. Dieser Versatz ist wie bei den vorstehenden Lösungen zur Verwirklichung des Überschnittes so gewählt. Alle drei Mäheinheiten haben in der Arbeitsstellung zur Bodenanpassung ein eigenes Entlastungssystem. Zur Einnahme der Transportstellung wird die mittlere Mäheinheit weit angehoben und die beiden seitlichen werden in Fahrtrichtung zeigend um 90 Grad daruntergeschwenkt.

An einer derartigen Tragrahmenkonstruktion ist ebenfalls der auf die einzelnen Entlastungssysteme zurückzuführende hohe Materialaufwand zu bemängeln. In der Transportstellung bleibt nicht genügend Bodenfreiheit, da die Hubeinrichtung in ihrer Aushebehöhe begrenzt ist und die daruntergeschwenkten Mäheinheiten sehr viel Platz benötigen. Der wesentlichste Nachteil ist aber der sehr weit vorn liegende Schwerpunkt, wodurch der Einsatz eines derartigen Rotormähwerkes wohl ausschließlich solchen schweren Maschinen wie einem Feldhäcksler vorbehalten bleiben dürfte.

Schließlich ist noch ein Tragrahmen für ein Rotormähwerk großer Arbeitsbreite in gezogener Ausführung durch das EP 0 503 395 bekannt geworden, der zwei Mäheinheiten trägt. Diese beiden Mäheinheiten sind quer an einem in Fahrtrichtung zeigenden Fahrgestell angebracht,das sich über einen breitenverstellbaren Querträger mit Rädern auf dem Erdboden abstützt. Die Mäheinheiten sind zur Erzielung des schon mehrfach erwähnten Überschnittes untereinander in Fahrtrichtung gesehen versetzt. Sie sind mittels parallelogrammartigen Anlenkungen an Seitenträgern, die um horizontale und in Fahrtrichtung zeigende Achsen verschwenkbar sind, befestigt. Jede Mäheinheit besitzt ein eigenes Hub- und Entlastungssystem.Zum Straßentransport werden auch hier die Seitenträger um 90 Grad nach oben geschwenkt, und zusätzlich wird noch der Querträger in der Breite zusammengefahren.

Trotzdem es sich hier um eine Anhängemaschine handelt, ist in der Transportstellung durch die hohe Schwerpunktlage die Fahrstabilität schlecht, zumal zusätzlich noch der Querträger in der Breite zusammengeführt werden muß. Letztgenannter Fakt erfordert außerdem bei der Umrüstung von der Arbeitsstellung in die Transportstellung vom Fahrer eine erhöhte Aufmerksamkeit, da diese Tätigkeit nicht beim Stillstand der Maschine zu bewerkstelligen ist. Da auch hier jede Mäheinheit ein eigenes Entlastungssystem besitzt, ist der Materialaufwand für diesen Tragrahmen erheblich.

Deshalb wird die mit der Erfindung zu lösende Aufgabe darin gesehen, einen Tragrahmen für ein Rotormähwerk großer Arbeitsbreite zu schaffen, der nur mit einem Entlastungssystem für alle Mäheinheiten und dadurch mit relativ wenig Materialeinsatz auskommt, wo in der Transportstellung der Mäheinheiten durch diese weder die Sichtverhältnisse für den Fahrer noch die Bodenfreiheit für die Maschine negativ beeinflußt werden und der keine Beeinträchtigung der Fahrstabilität der Maschine durch die Umstellung der Mäheinheiten von der Arbeitsstellung in die Transportstellung mit sich bringt.

Die Lösung der Aufgabe ist durch die kennzeichnenden Merkmale des Anspruches 1 gegeben.

Dadurch wird es möglich, daß durch die parallelogrammartige Anlenkung der linken und der rechten Mäheinheit beide bei der Umstellung von der Arbeitsstellung in die Transportstellung und umgekehrt nur quer zur Fahrtrichtung relativ zueinander verschoben werden. Dabei nehmen sie in Fahrtrichtung gesehen und auch in der Höhe wieder exakt die gleiche Position ein wie vorher.

Vorteilhafte Ausgestaltungen sind in den Unteransprüchen angegeben, auf die hier ausdrücklich verwiesen wird.

Obwohl als Entlastungsystem für das gesamte Rotormähwerk die Hub- und Entlastungseinrichtung das den Tragrahmen aufnehmenden Fahrzeugen völlig ausreichend ist, hat es sich als zweckmäßig erwiesen, jede Mäheinheit frei quer pendelnd an einem Tragbalken aufzuhängen,der aber in der Transportstellung festsetzbar ist. Dabei ist jede Mäheinheit mittels eines Pendelbalkens, von dessen Enden ausgehenden und nach unten gerichteten Trägern sowie der als stabile Baugruppe ausgebildeten Mährotoren als starres System gestaltet.

Es hat sich weiterhin als zweckmäßig herausgestellt, die Hauptschwinge und die die beiden Parallelogramme vervollständigenden Schwingen in der Arbeitsstellung gegenüber der Fahrtrichtung in einem Winkel zwischen 40 bis 60 Grad anzustellen. Bei Verwendung einer gebräuchlichen Durchmessergröße für die Mährotoren und einer entsprechenden Anzahl wird es durch siegelbildliches Verschwenken der Hauptschwinge auf die andere Seite ganz einfach möglich, das Rotormähwerk von einer sehr großen Arbeitsbreite auf eine schmale Transportbreite zu bringen.

Das Verschwenken wird zweckmäßigerweise durch einen doppeltwirkenden Hydraulikzylinder erreicht, der zwischen einem Gelenkpunkt am Vorderträger und der Hauptschwinge angeordnet ist.

Damit ergeben sich für den erfindungsgemäßen Tragbalken die Vorteile, daß der Materialaufwand gering ist, weil für beide Mäheinheiten nur ein Entlastungssystem und zum Verschwenken nur ein Betätigungsmechanismus notwendig ist. Dadurch, daß sich beide Mäheinheiten beim Verschwenken nur in der Horizontalen gegeneinander bewegen, beeinträchtigen diese in der Transportstellung weder die Sichtverhältnisse für den Fahrer noch die Bodenfreiheit für die Maschine. Auch die Fahrstabilität der Maschine ist in der Arbeitsstellung und der Transportstellung gleich gut.

Die Erfindung wird nachfolgend in drei Ausführungsvarianten näher erläutert, wobei die einzelnen Figuren zeigen:
- Fig.1:: eine Seitenansicht des Tragbalkens für ein Rotormähwerk an einem selbstfahrenden Schwadmäher
- Fig.2:: eine Vorderansicht nach Fig.1
- Fig.3:: eine Draufsicht nach Fig.1 mit dem Rotormähwerk in Arbeitsstellung
- Fig.4:: ein Rotormähwerk nach Fig.3 in Transportstellung
- Fig.5:: eine Seitenansicht des Tragbalkens für ein Rotormähwerk im Frontanbau an einem Schlepper
- Fig.6:: eine Draufsicht auf ein gezogenes Rotormähwerk in Arbeitsstellung
- Fig.7:: eine Draufsicht nach Fig.6 in Transportstellung

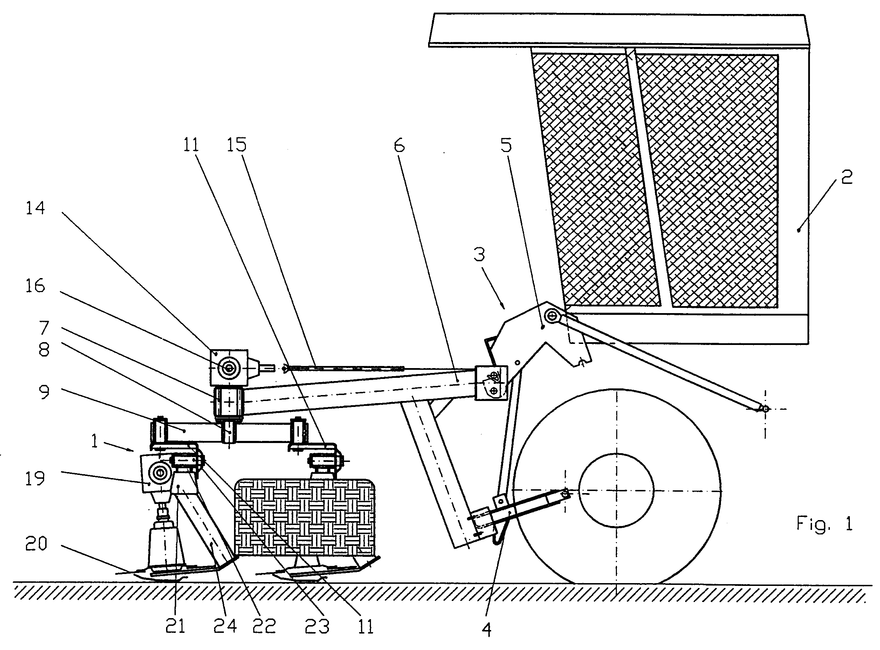

In den Figuren 1 bis 4 ist ein Tragrahmen für ein Rotormähwerk 1 großer Arbeitsbreite an einem selbstfahrenden Schwadmäher 2 dargestellt, wo in dessen Hubeinrichtung 3, bestehend aus beidseitigen unteren Lenkern 4 und oberen Lenkern 5, ein Rahmen 6 eingehangen ist. Zwischen seinen vorderen Enden nimmt er in einer festen Verbindung einen quer zur Fahrtrichtung angeordneten Vorderträger 7 auf. Mittig und an seinen beiden äußeren Enden ist der Vorderträger 7 mit je einem nach unten zeigenden Zapfen 8 bestückt, wobei der mittlere Zapfen 8 als Drehpunkt für eine Hauptschwinge 9 dient, die in bzw. entgegengesetzt zur Fahrtrichtung gesehen den Vorderträger 7 längenmäßig im gleichen Abstand überragt. Dadurch kann die Hauptschwinge 9 in einer horizontalen Ebene schwenken.

Die beiden äußeren Zapfen 8 stellen den Drehpunkt für je eine Schwinge 10 dar, die von da ausgehen und parallel zu den nach vorn bzw. hinten zeigenden Teilstücken der Hauptschwinge 9 ausgerichtet sind und deren Länge ebenfalls der dieser Teilstücken entspricht. Damit sind auch beide Schwingen 10 in einer horizontalen Ebene verschwenkbar.

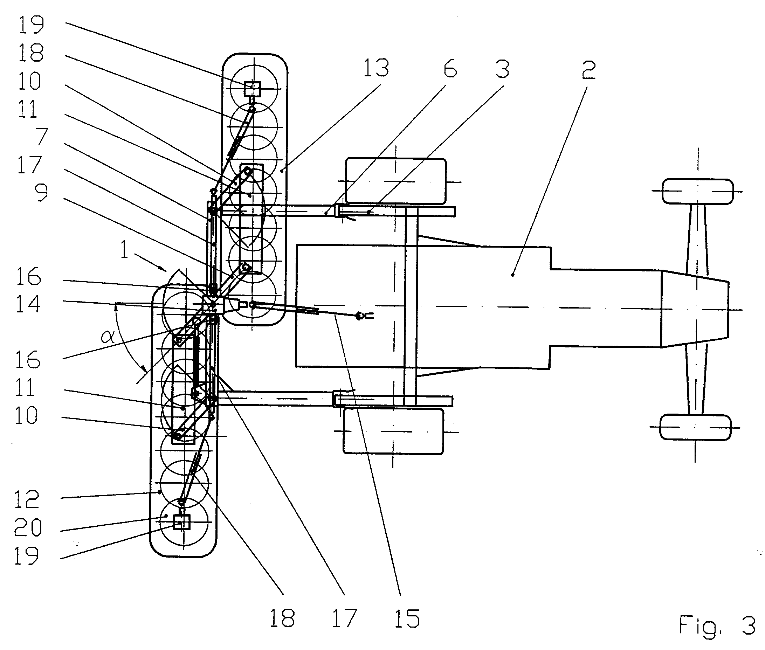

Unter der Annahme, daß die Hauptschwinge 9 wie in Figur 3 in Fahrtrichtung gesehen nach links vorn zeigt, weist auch die linke Schwinge 10 dort hin. Da zwischen deren vorderen Enden ein Tragbalken 11 gelenkig aufgenommen wird, bilden diese genannten Teile ein horizontal verschwenkbewegliches Parallelogramm, das vor dem Vorderträger 7 liegt. Analog verhält es sich auf der rechten Seite, nur mit dem Unterschied, daß sich dieses Parallelogramm hinter dem Vorderträger 7 befindet. Die Tragbalken 11 sind mit einer linken Mäheinheit 12 bzw. einer rechten Mäheinheit 13 verbunden.

Mittig und oben auf dem Vorderträger 7 ist ein Verteilergetriebe 14 angebracht, das von einer Antriebsgelenkwelle 15 angetrieben wird. Von dessen beiden seitlichen Abtrieben 16 gehen bis zu den Enden des Vorderträgers 7 reichende Zwischenwellen 17 ab, an die sich längsverschiebbare Gelenkwellen 18 anschließen. Diese Gelenkwellen 18 treiben als Kegelradgetriebe ausgebildete Seitengetriebe 19 an, die mit ihrer Abtriebswelle auf der Rotationsachse des außenliegenden Mährotors 20 der linken bzw. der rechten Mäheinheit 12;13 sitzen.

Zur besseren Bodenkopierung in der Arbeitsstellung der linken und der rechten Mäheinheiten 12;13 sind diese am Tragbalken 11 pendelnd aufgehangen, wobei ein die Mährotoren 20 einer Mäheinheit 12;13 tragender Pendelbalken 21 oberhalb in der vertikalen Ver längerung des Schwerpunktes der betreffenden Mäheinheit 12;13 ein Aufnahmelager 22 besitzt, das einen am Tragbalken 11 befestigten und in Fahrtrichtung zeigenden Pendelzapfen 23 umfaßt. In der Transportstellung hat es sich dagegen jedoch als zweckmäßig er wiesen, mittels einer Verriegelung zwischen dem Tragbalken 11 und dem Pendelbalken 21 die Querpendelung der beiden Mäheinheiten 12;13 zu unterbinden.

Die linke und die rechte Mäheinheit 12;13 sind mit einer Vielzahl von Mährotoren 20 ausgestattet - in allen hier gezeigten Ausführungsvarianten mit jeweils sieben Stück -, die als geschlossene und in sich stabile Montagebaugruppe ausgebildet ist und die von den Enden der Pendelbalken 21 ausgehenden und nach unten gerichteten Trägern 24 aufgenommenn wird.

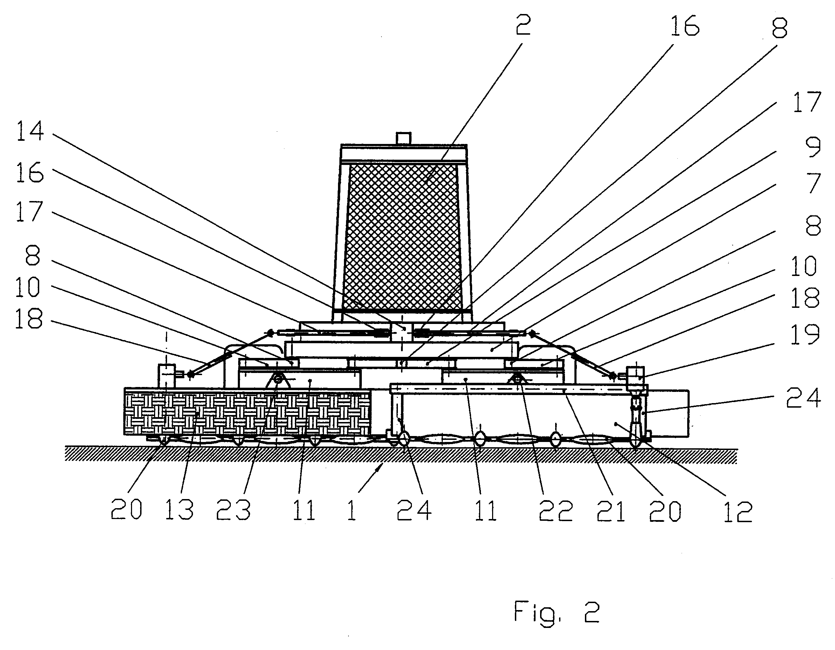

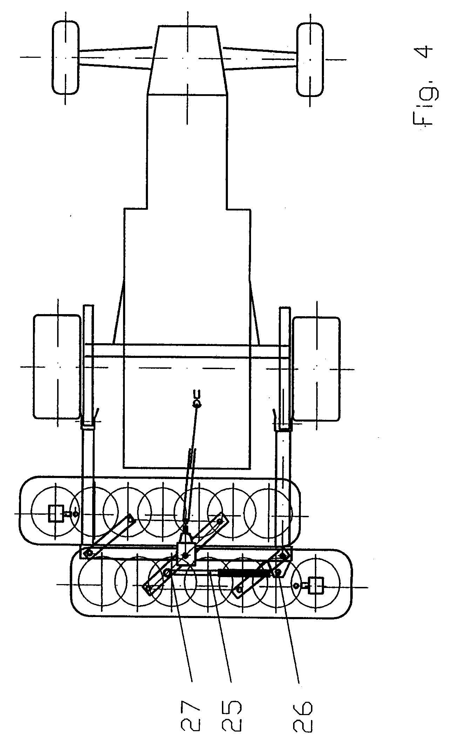

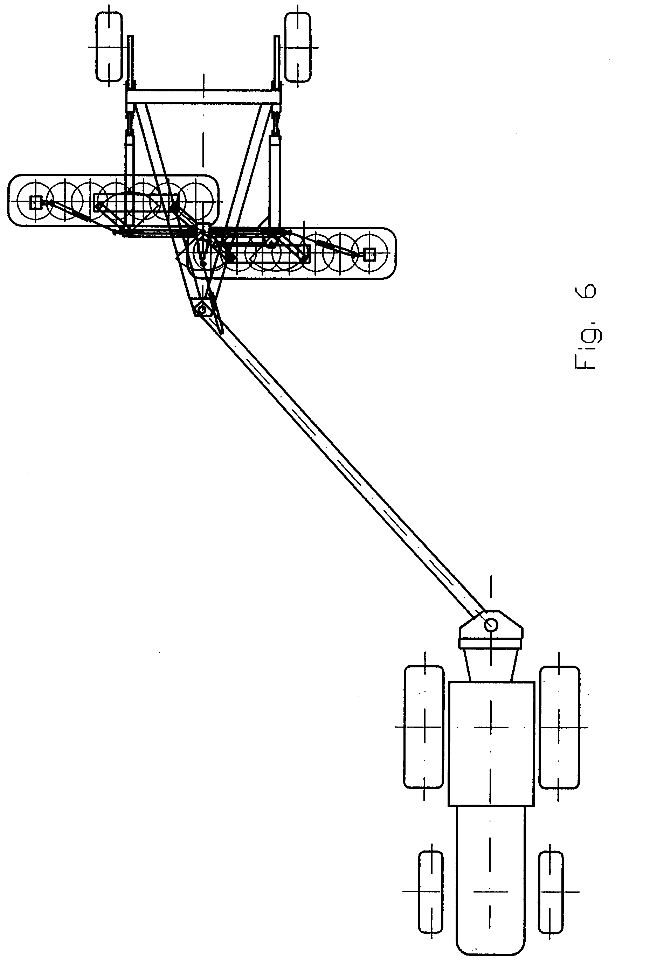

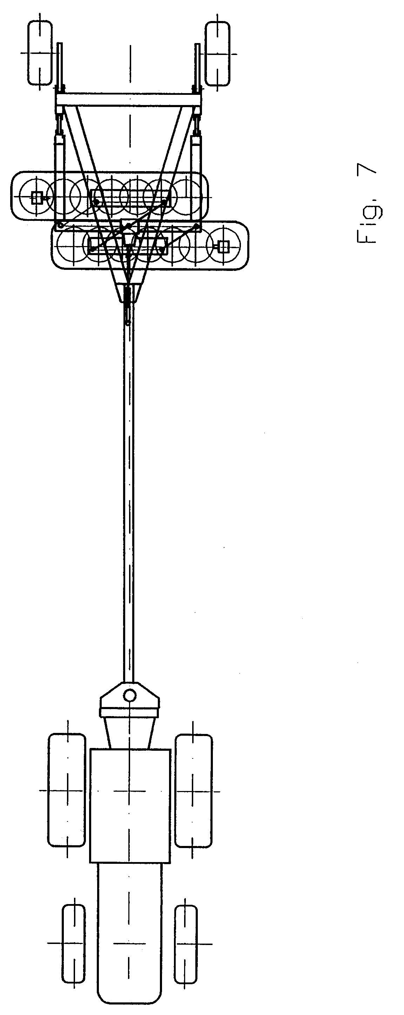

Wenn sich der Tragrahmen in der Arbeitsstellung des Rotormähwerkes 1 befindet, wie es in den Figuren 2, 3 und 6 dargestellt ist, weist die Hauptschwinge 9 gegenüber der Fahrtrichtung einen Winkel α auf, der sich im Bereich von 40 bis 60 Grad bewegt. Befindet sich dagegen der Tragrahmen in der Transportstellung, wie es die Figuren 4 und 7 zeigen, ist die Hauptschwinge 9 in die spiegelbildlich gleiche Position auf die andere Seite verschwenkt.

Diese Bewegung wird durch einen doppeltwirkenden Hydraulikzylinder 25 bewirkt, der zwischen einem Gelenkpunkt 26 am Vorderträger 7 und einem Bolzen 27 der Hauptschwinge 9 befestigt ist. Damit auch ein ausreichender Hebelarm für die Schwenkbewegung zur Verfügung steht, ist der Bolzen 27 in ausreichendem Abstand vom mittleren Zapfen 8 auf der Hauptschwinge 9 angebracht.

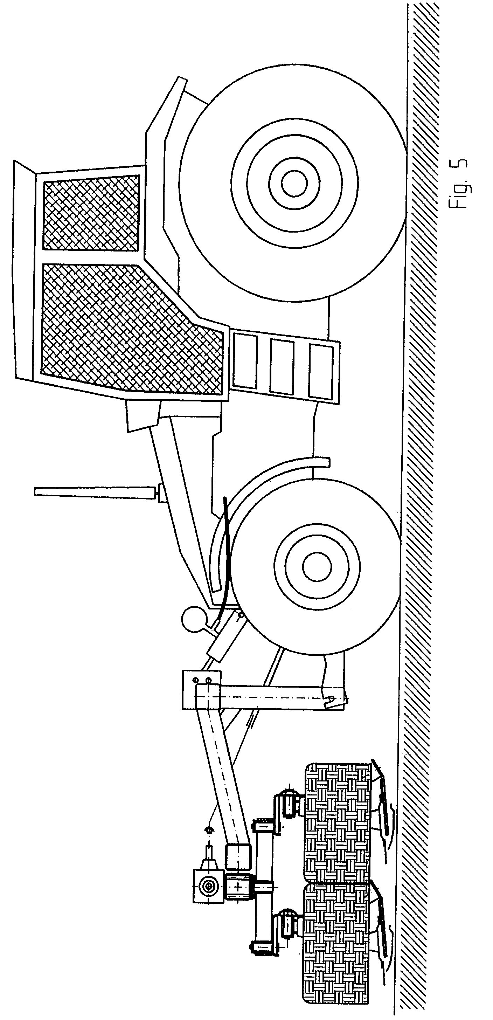

Die Darstellungen in den Figuren 5 bis 7 beweisen, daß die hier vorgestellte Erfindung völlig identisch auch als Frontanbaugerät an einem Schlepper oder als gezogenes Rotormähwerk 1 angewendet werden kann.

### Aufstellung der verwendeten Bezugszeichen

- 1: Rotormähwerk
- 2: selbstfahrender Schwadmäher
- 3: Hubeinrichtung
- 4: untere Lenker
- 5: obere Lenker
- 6: Rahmen
- 7: Vorderträger
- 8: Zapfen
- 9: Hauptschwinge
- 10: Schwinge
- 11: Tragbalken
- 12: linke Mäheinheit
- 13: rechte Mäheinheit
- 14: Verteilergetriebe
- 15: Antriebsgelenkwelle
- 16: seitliche Abtriebe
- 17: Zwischenwellen
- 18: Gelenkwellen
- 19: Seitengetriebe
- 20: Mährotor
- 21: Pendelbalken
- 22: Aufnahmelager
- 23: Pendelzapfen
- 24: Träger
- 25: doppeltwirkender Hydraulikzylinder
- 26: Gelenkpunkt
- 27: Bolzen
- α: Winkel

## Patentansprüche

1. Tragrahmen für ein Rotormähwerk großer Arbeitsbreite zum Frontanbau an die Hubeinrichtung einer selbstfahrenden Landmaschine, eines Geräteträgers oder eines Schleppers bzw. an die Hubeinrichtung einer gezogenen Mähmaschine, wobei :
- das Rotormähwerk aus zwei Mäheinheiten besteht, die zueinander derart schwenkbeweglich angeordnet sind, daß sie von einer Arbeitsstellung in eine Transportstellung bringbar sind, wo ihre Außenkanten innerhalb der für die Straßenfahrt zulässigen Transportbreite bleiben,
- die Mäheinheiten in der Arbeitsstellung quer zur Fahrtrichtung, jedoch untereinander in Fahrtrichtung etwas versetzt, angeordnet sind,
- zwischen dem Träger- bzw. Zugfahrzeug und den Mäheinheiten eine Antriebsverbindung besteht,
**dadurch gekennzeichnet, daß**
- in die beidseitigen unteren Lenker (4) und oberen Lenker (5) der Hubeinrichtung (3) ein Rahmen (6) eingehangen ist, der zwischen seinen vorderen Enden einen starr mit diesen verbundenen Vorderträger (7) aufnimmt,
- mittig und an den beiden äußeren Enden des Vorderträgers(7) je ein nach unten zeigender Zapfen (8) angebracht ist,
- im mittleren Zapfen (8) eine Hauptschwinge (9) mittig drehbar gelagert ist, so daß sie in einer horizontalen Ebene, den Vorderträger (7) in Fahrtrichtung gesehen nach vorn und hinten überragend, verschwenkbar ist,
- in den äußeren Zapfen (8) je eine Schwinge (10) von da ausgehend und parallel zu den nach vorn bzw. hinten zeigenden Teilstücken der Hauptschwinge (9) ausgerichtet in einer horizontalen Ebene drehbar gelagert ist, wobei die Länge beider Schwingen (10) der der jeweiligen Teilstücke der Hauptschwinge (9) entspricht,
- in Fahrtrichtung gesehen auf der linken und auf der rechten Seite zwischen den freien Enden jeder Schwinge (10) und der Hauptschwinge (9) je ein Tragbalken (11) gelenkig aufgenommen ist, der parallel zum Vorderträger(7) quer zur Fahrtrichtung angeordnet ist und die linke Mäheinheit (12) bzw. die rechte Mäheinheit (13) trägt.
- etwa mittig am Vorderträger (7) ein Verteilergetriebe (14) angebracht ist, von dessen beiden seitlichen Abtrieben (16) bis zum Ende des Vorderträgers (7) reichende Zwischenwellen (17) abgehen, an die sich längsverschiebbare Gelenkwellen (18) anschließen und die antriebsmäßig mit Seitengetrieben (19), die mit ihrer Abtriebswelle auf der Rotationsachse des außenliegenden Mährotors (20) der linken Mäheinheit (12) bzw. der rechten Mäheinheit (13) sitzen, verbunden sind.

2. Tragrahmen nach Anspruch 1, dadurch gekennzeichnet, daß die linke und rechte Mäheinheit (12;13) an ihren Tragbalken (11) pendelnd über Pendelbalken (21) aufgehangen sind, an denen sich oberhalb in der vertikalen Verlängerung des Schwerpunktes jeder Mäheinheit (12;13) je ein Aufnahmelager (22) befindet, das einen am Tragbalken (11) befestigten und in Fahrtrichtung zeigenden Pendelzapfen (23) umfaßt.

3. Tragrahmen nach den Ansprüchen 1 und 2,dadurch gekennzeichnet, daß die linke und rechte Mäheinheit (12;13) mehrere Mährotoren (20) besitzt, die zwischen von den Enden des Pendelbalkens (21) ausgehenden und nach unten gerichteten Trägern (24) angeordnet sind.

4. Tragrahmen nach den Ansprüchen 1 bis 3, dadurch gekennzeichnet, daß in der Arbeitsstellung der linken und rechten Mäheinheit (12;13) die Hauptschwinge (9) gegenüber der Fahrtrichtung einen Winkel (α) aufweist, der im Bereich von etwa 40 bis 60 Grad liegt, und in der Transportstellung der linken und rechten Mäheinheit (12;13) befindet sich die Hauptschwinge (9) in einer spiegelbildlichen Position im Vergleich zur Arbeitsstellung.

5. Tragrahmen nach den Ansprüchen 1 bis 4, dadurch gekennzeichnet, daß zwischen einem Gelenkpunkt (26) am Vorderträger (7) und der Hauptschwinge (9) in einem Bolzen (27) neben dem mittleren Zapfen (8) ein doppeltwirkender Hydraulikzylinder (25) gelenkig angeschlossen ist.

6. Tragrahmen nach den Ansprüchen 1 bis 5, dadurch gekennzeichnet, daß die linke und rechte Mäheinheit (12;13) in der Transportstellung mittels einer Verriegelung zwischen dem Tragbalken (11) und dem Pendelbalken (21) festsetzbar ist.
